Europäisches Patentamt

European Patent Office

Office européen des brevets

(19)

(11) Veröffentlichungsnummer: **0 032 667**
**A1**

(12)

# EUROPÄISCHE PATENTANMELDUNG

(21) Anmeldenummer: **81100046.2**

(22) Anmeldetag: **07.01.81**

(51) Int. Cl.³: **F 24 J 3/02, E 04 D 3/30,** **E 04 D 3/32**

(30) Priorität: 16.01.80 DE 3001335
27.06.80 DE 3024170
11.10.80 DE 3038472

(43) Veröffentlichungstag der Anmeldung: **29.07.81**
**Patentblatt 81/30**

(84) Benannte Vertragsstaaten: **AT BE CH DE FR GB IT LI NL SE**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Golly, Helmut, Dr., Am Schieferberg 17, D-6233 Kelkheim (Taunus) (DE)**
Erfinder: **Heinz, Otto, Bahnhofstrasse 66, D-6078 Neu-Isenburg (DE)**

(54) **Wärme-Absorber als Teil von Gebäude-Aussenflächen.**

(57) Wärme-Absorber als Teil von Gebäude-Aussenflächen, der versehen ist mit mindestens einem eingreifenden Ende (5d) und mindestens einem aufnehmenden Ende (4, 4a) einer Steckkupplung, die die Verbindung für den Durchtritt des Wärmeträgers jeweils von einem Absorber zum nächsten Absorber herstellt. Die Absorber lassen sich leicht und schnell montieren. Eventuell auftretende Undichtigkeiten wirken sich nicht nach der Gebäudeinnenseite, sondern nach aussen aus.

0032667

HOECHST AKTIENGESELLSCHAFT    HOE 80/F 006K    Dr.EL/cr

**Wärme-Absorber als Teil von Gebäude-Außenflächen**

Um Erdöl, Gas oder Elektrizität für Heizzwecke einzusparen, werden immer mehr Maßnahmen ergriffen, der Umwelt Energie für diese Zwecke zu entziehen.

Bekannt sind dafür Kollektoren, die vor allem nach Art der Dachflächenfenster in die Dachhaut eingebaut oder als komplette Elemente auf die fertige Dachhaut aufgelegt werden. Dabei durchbrechen die Befestigungen und notwendigen Anschlüsse die Dachhaut und ergeben eine Vielzahl von Stellen, die abgedichtet werden müssen.

Nachteilig ist bei Kollektoren, daß sie nur direkte Sonnenstrahlung aufnehmen und deshalb für die Ganzjahresheizung in unseren Breitengraden nicht geeignet sind. Ebenfalls bekannt sind Absorber. Sie sind plattenförmig oder in Form von Rohrregistern beispielsweise auf Dächern befestigt. Hinsichtlich der Befestigung weisen sie die gleichen Probleme auf wie Kollektoren. Häufig sind hitzebedingte Verwerfungen sichtbar.

Nachteilig ist bei Kollektoren wie bei Absorbern die Beeinträchtigung des optischen Gesamteindrucks, insbesondere von Dächern.

Es sind aber bereits Absorber bekannt, die sich in ihrem Aussehen den üblichen Dachdeckungs- oder Wandbekleidungsmaterialien anpassen. Sie sind jedoch nachteilig, da auftretende Undichtigkeiten sich nach der Gebäude-Innenseite auswirken. Ferner ist die Installation solcher Absorber aufwendig.

Es wurde nun ein Wärme-Absorber als Teil von Gebäude-Außenflächen gefunden, der dadurch gekennzeichnet ist, daß er mit mindestens einem eingreifenden Ende und mindestens einem aufnehmenden Ende einer Steckkupplung versehen ist.

Das (die) eingreifende(n) Ende(n) einer (mehrerer) Steckkupplung(en) befindet (befinden) sich an der Unterseite bzw. Rückseite (bezüglich der Lage im Dach bzw. in der Hauswand) des Absorbers, das (die) aufnehmende(n) Ende(n) entsprechend auf der Oberseite bzw. Vorderseite des Absorbers.

Das (die) eingreifende(n) Ende(n) einer (mehrerer) Steckkupplung(en) eines Absorbers und das (die) aufnehmende(n) Ende(n) einer (mehrerer) Steckkupplung(en) eines (nach unten) sich anschließenden Absorbers stellen die Verbindung(en) für den Durchtritt des Wärmeträgers her.

Das aufnehmende Ende einer Steckkupplung ist vorzugsweise nicht starr, sondern elastisch gelagert, das heißt durch bekannte elastische Dichtungsmaterialien in einer Vertiefung des Absorbers angebracht. Dadurch werden thermisch bedingte Ausdehnungserscheinungen zwischen jeweils zwei Absorbern aufgefangen.

Der Absorber besteht zweckmäßigerweise aus Metall, beispielsweise Stahl, Kupfer oder Aluminiumlegierung, oder aus einem Kunststoff, vorzugsweise Polyvinylchlorid, Polypropylen, chloriertem Polyethylen oder schlagzäh modifiziertem Polystyrol. Der Kunststoff kann auch verstärkt sein; vorzugsweise ist es dann ein glasfaserverstärkter Polyester.

Der Absorber kann auch aus einer Kombination von Kunststoff und Metall bestehen, beispielsweise aus Kunststoff mit Kaschierung durch eine äußere Metallfolie. Als Kaschierung kann auch eine mineralische (anorganische) Deckschicht fungieren, z.B. aus Ton, Keramik, Asbestzement oder einem anderen faserbewehrten Beton, oder über eine Kleberschicht aufgebrachter Sand.

Der Absorber stellt einen flachen, plattenförmigen Hohlkörper dar. Für Hauswände kann er an der Außen-(Vorder-)-
seite dekorative Strukturen aufweisen. Für den Einsatz
auf Dächern kann der Absorber die Form von Strukturen
üblicher Dackdeckungsmaterialien haben, beispielsweise
der sogenannten Berliner Welle oder Frankfurter Pfanne.

Eingreifendes  bzw. aufnehmendes Ende der Steckkupplung
können aus Metall, beispielsweise Stahl, vorzugsweise
nichtrostend, oder Messing oder Aluminiumlegierung oder
aus einem Kunststoff, beispielsweise Polyamid oder Polyacetal, bestehen, oder aus einer Kombination von Metall
und Kunststoff.

Eine erste bevorzugte Ausführungsform ist dadurch gekennzeichnet, daß sowohl das eingreifende als auch das aufnehmende Ende der Steckkupplung aus demselben Material
bestehen wie der Absorber und an diesen angeformt
oder angeschweißt sind.

Eine zweite bevorzugte Ausführungsform ist dadurch
gekennzeichnet, daß sowohl das eingreifende Ende als auch
das aufnehmende Ende aus demselben Material bestehen wie
der Absorber und an diesen angeformt oder angeschweißt
sind und daß sowohl das eingreifende Ende als auch das
aufnehmende Ende parallel zu einer der Achsen der Unterseite (Rückseite) bzw. Oberseite (Vorderseite) des
Absorbers angeordnet sind.

Die Absorber werden durch die Steckkupplungen überlappend
miteinander verbunden. Um die Absorber auf dem Dach oder
an der Gebäude-Außenwand festzuhalten, werden sie durch
vorgegebene Öffnungen auf der jeweiligen Unterkonstruktion befestigt, beispielsweise durch Nägel oder vorzugsweise durch Schrauben. Zweckmäßigerweise erfolgt das
Verschrauben im Bereich der Überlappung von zwei Absorbern. Wenn die Absorber genügendes Gewicht aufweisen,
ist, wie bei Dachziegeln üblich,  ein bloßes Einhängen

- 4 -          0032667

in die Dachunterkonstruktion prinzipiell möglich.
Zweckmäßig ist es dann aber, eine Sicherung der Steckkupplungen gegen ein Auseinanderdrücken durch den Druck
des Wärmeträgers in den Absorber vorzusehen.

Die Reihe der untersten Absorber bzw. der obersten Absorber werden jeweils an den Wärmeträger-Kreislauf angeschlossen.

Beispielshafte Ausführungsformen der Erfindung sind im
folgenden beschrieben an Hand der Figuren 1 bis 9.

Es stellen dar:

Figur 1 die Ansicht auf einen Absorber von hinten (unten),
Figur 2 einen senkrechten Schnitt längs der Linie II-II

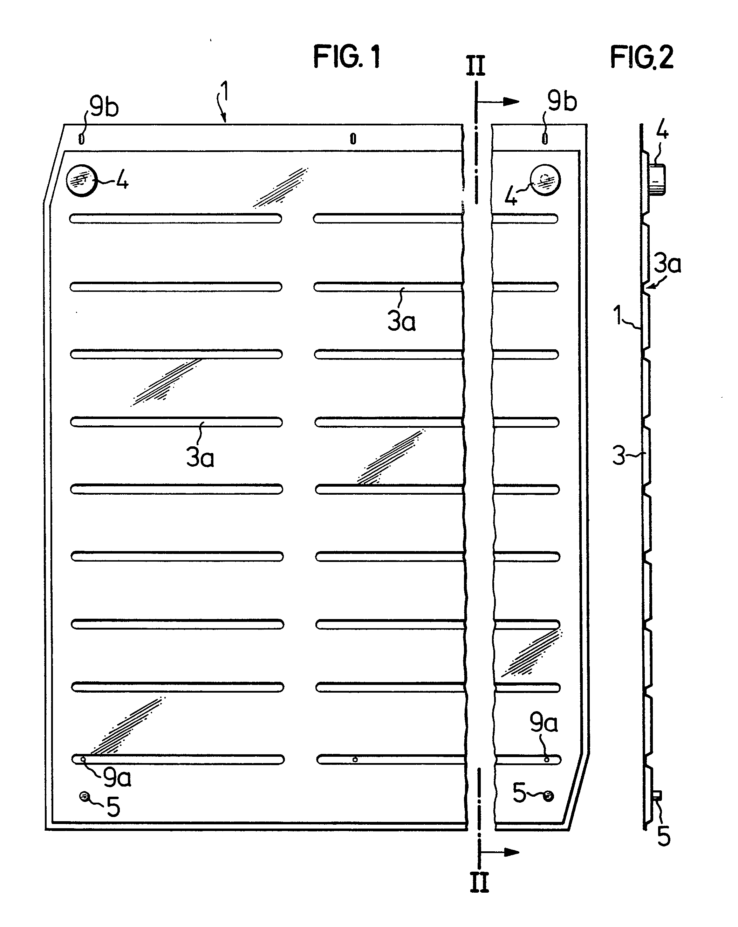

in Figur 1,

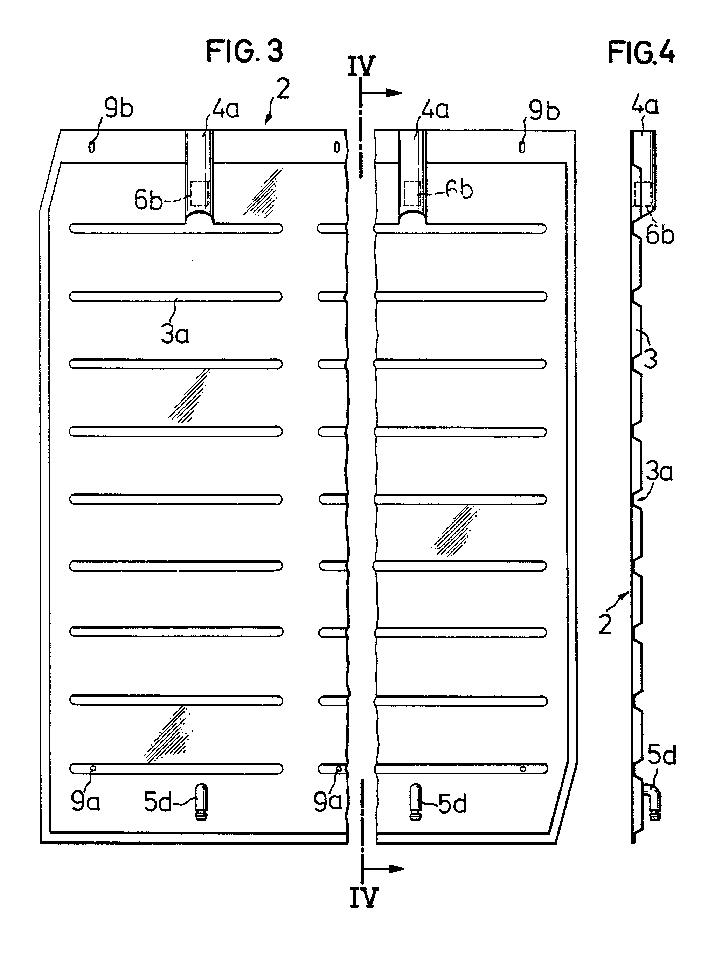

Figur 3 die Ansicht auf einen Absorber gemäß der zweiten
bevorzugten Ausführungsform von hinten (unten),

Figur 4 einen senkrechten Schnitt längs der Linie IV-IV
in Figur 3,

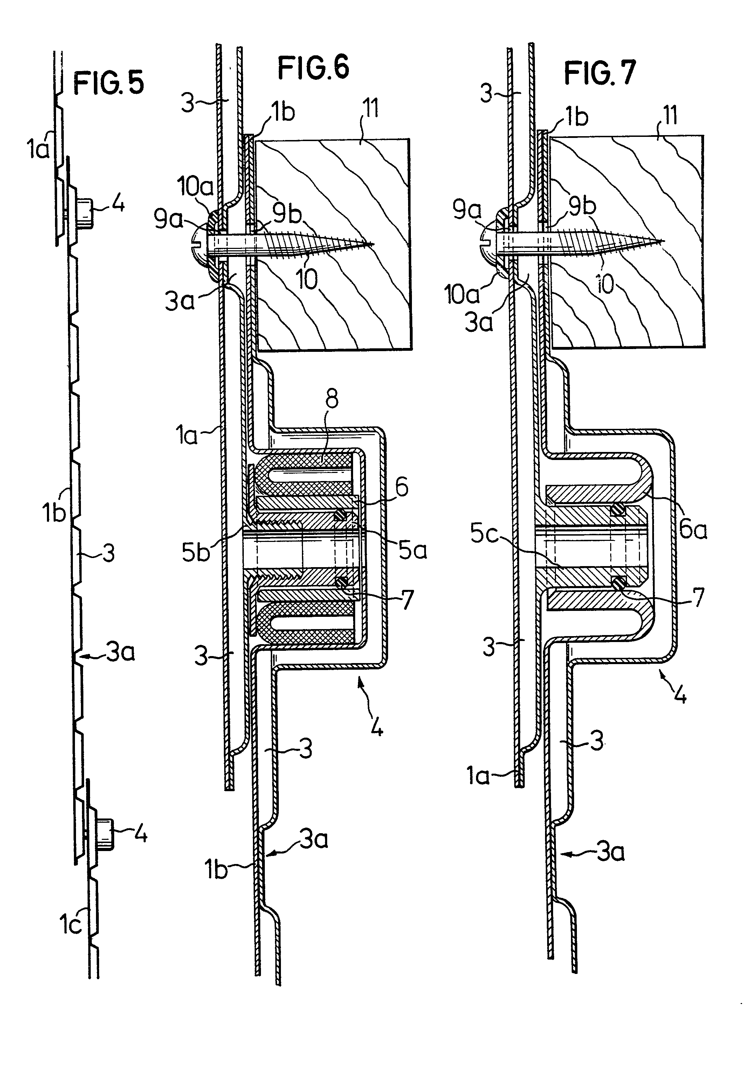

Figur 5 eine Seitenansicht auf einen Absorber mit der
Überlappung zum nach unten folgenden Absorber und dem
überlappenden Ende des nach oben folgenden Absorbers,

Figur 6 einen  Schnitt durch die überlappenden Enden
zweier Absorber mit Steckkupplung,

Figur 7 einen Schnitt durch die überlappenden Enden
zweier Absorber mit Steckkupplung gemäß der ersten
bevorzugten Ausführungsform,

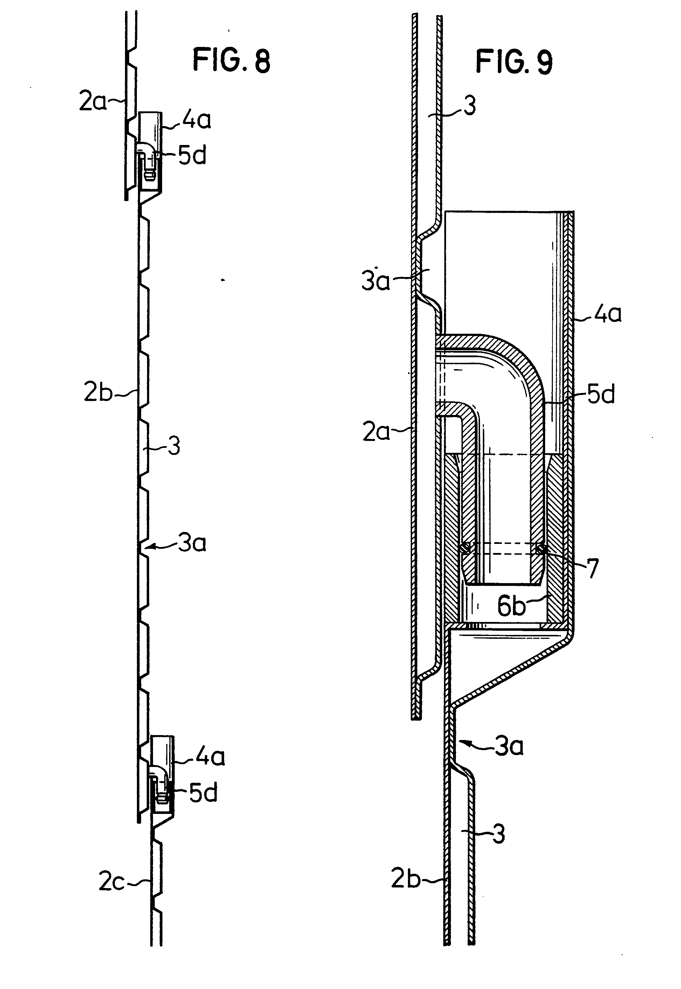

Figur 8 eine Seitenansicht auf einen Absorber mit der
Überlappung zum nach unten folgenden Absorber und dem
überlappenden Ende des nach oben folgenden Absorbers gemäß der zweiten bevorzugten Ausführungsform, und

Figur 9 einen Schnitt durch die überlappenden Enden
zweier Absorber mit Steckkupplung gemäß der zweiten bevorzugten Ausführungsform.

In den Figuren bedeuten:

| | |
|---|---|
| 1, 2 | Absorber |
| 1a, b, c | 3 aufeinander folgende, sich überlappende Absorber |
| 2a, b, c | 3 aufeinander folgende, sich überlappende Absorber (gemäß der zweiten bevorzugten Ausführungsform) |
| 3 | Absorber-Hohlraum |
| 3a | Sicke |
| 4 | Ausbuchtung, Vertiefung (enthält das aufnehmende Ende der Steckkupplung) |
| 4a | Ausbuchtung, Vertiefung (enthält das aufnehmende Ende der Steckkupplung gemäß der zweiten bevorzugten Ausführungsform) |
| 5 | eingreifendes Ende der Steckkupplung |
| 5a | Anteil des eingreifenden Endes der Steckkupplung mit Innengewinde |
| 5b | Anteil des eingreifenden Endes der Steckkupplung mit Außengewinde |
| 5c | eingreifendes Ende der Steckkupplung gemäß der ersten bevorzugten Ausführungsform |
| 5d | eingreifendes Ende der Steckkupplung gemäß der zweiten bevorzugten Ausführungsform |
| 6 | aufnehmendes Ende der Steckkupplung |
| 6a | aufnehmendes Ende der Steckkupplung gemäß der ersten bevorzugten Ausführungsform |
| 6b | aufnehmendes Ende der Steckkupplung gemäß der zweiten bevorzugten Ausführungsform |
| 7 | Dichtungsring |
| 8 | elastisches Dichtungsmaterial |
| 9a, b | Löcher für Befestigungszwecke |
| 10 | Schraube |

10a     Unterlegscheibe

11      Teil der Dach- bzw. Wandunterkonstruktion, z.B.
        Dachlatte.


Die Sicken (3a) auf der Rückseite (Unterseite) des Absorbers (1,2) dienen der Versteifung. An diesen Stellen sind Vorder- und Rückseite miteinander verbunden. Diese Verbindungen dienen als Abstandshalter für den Hohlraum (3), durch den der Wärmeträger fließt, und sie verhindern eine Aufblähung des Absorbers durch den Druck des Wärmeträgers.

Die Abstandshaltung des Hohlraums (3) kann auch durch Einkleben eines Abstandsgewebes, wie es in der DE-OS 27 14 901 beschrieben ist, bewirkt werden.

Eingreifendes Ende (5, 5c, 5d), aufnehmendes Ende (6, 6a, 6b) und Dichtungsring (7) bilden die Steckkupplung, durch die die Hohlräume zweier sich überlappender Absorber (1a) und (1b) bzw. (2a) und (2b) miteinander verbunden sind, und durch die der Wärmeträger vom Absorber (1b) bzw. (2b) in den nach oben hin folgenden Absorber (1a) bzw. (2a) hindurchtritt.

Das eingreifende Ende (5) besteht aus einem Anteil (5a), der mittels eines Gewindes auf den an den Absorber angeformten Anteil (5b) aufgeschraubt ist.

Das aufnehmende Ende (6) der Steckkupplung ist mittels eines elastischen Dichtungsmaterials (8) in der Ausbuchtung (4) des Absorbers (1b) befestigt.

Durch die Löcher (9a) und (9b) werden die sich überlappenden Absorber (1a) und (1b) bzw. (2a) und (2b) mittels einer Schraube (10) auf der Dach- bzw. Wandunterkonstruktion (11), beispielsweise einer Dachlatte, befestigt. Das Loch (9b) ist zweckmäßigerweise als Langloch ausgebildet. Dadurch wird bei Wärmedehnung die Längenänderung des Absorbers (1b) bzw. (2b) gegenüber dem Absorber (1a) bzw. (2a) ermöglicht.

Die erfindungsgemäßen Absorber lassen sich leicht und schnell montieren. Sie haben ferner den Vorteil, daß eventuell auftretende Undichtigkeiten sich nicht nach der Gebäudeinnenseite auswirken, sondern nach außen.

Die Absorber gemäß den beiden bevorzugten Ausführungsformen haben den Vorteil, daß das elastische Dichtungsmaterial (8) entfallen kann.

Die Absorber gemäß der zweiten bevorzugten Ausführungsform haben den weiteren Vorteil, daß eine Befestigung auf der Dach- bzw. Wandunterkonstruktion (11) mittels Schrauben (10) für den Zusammenhalt der Steckverbindung nicht mehr erforderlich ist.

Durch eine sog. Schablonierung, d.h. Abschrägung der Absorberplatten an zwei diagonal gegenüberliegenden Ecken (in Fig. 1 links oben und rechts unten) wird die Vierfach-Überlappung an den Kreuzungspunkten von vier Platten zu einer Dreifach-Überlappung reduziert.

## PATENTANSPRÜCHE

1. Wärme-Absorber als Teil von Gebäude-Außenflächen, dadurch gekennzeichnet, daß er mit mindestens einem eingreifenden Ende und mindestens einem aufnehmenden Ende einer Steckkupplung versehen ist.

2. Wärme-Absorber nach Anspruch 1, dadurch gekennzeichnet, daß sowohl das eingreifende Ende, als auch das aufnehmende Ende aus demselben Material bestehen wie der Absorber und an diesen angeformt oder angeschweißt sind.

3. Wärme-Absorber nach Anspruch 2, dadurch gekennzeichnet, daß sowohl das eingreifende Ende als auch das aufnehmende Ende parallel zu einer der Achsen der Unterseite (Rückseite) bzw. Oberseite (Vorderseite) des Absorbers angeordnet sind.

4. Wärme-Absorber nach Anspruch 1, dadurch gekennzeichnet, daß das aufnehmende Ende der Steckkupplung elastisch gelagert ist.

5. Wärme-Absorber nach Ansprüchen 1 bis 4, dadurch gekennzeichnet, daß er in der Form bekannter Dachdeckungs- oder Wandbekleidungsmaterialien ausgebildet ist.

6. Wärme-Absorber nach Ansprüchen 1 bis 5, dadurch gekennzeichnet, daß er aus einem metallischen Werkstoff besteht.

7. Wärme-Absorber nach Ansprüchen 1 bis 6, dadurch gekenenzeichnet, daß er aus einem Kunststoff besteht.

8. Wärme-Absorber nach Anspruch 7, dadurch gekennzeichnet, daß er aus Polyvinylchlorid oder Polypropylen oder

0032667

chloriertem Polyäthylen oder schlagzäh modifiziertem
Polystyrol besteht.

9. Wärme-Absorber nach Anspruch 7, dadurch gekennzeichnet, daß er aus einem verstärkten Kunststoff
besteht.

10. Wärme-Absorber nach Ansprüchen 1 bis 5, dadurch gekennzeichnet, daß er aus einer Kombination von Metall
und Kunststoff besteht.

0032667

FIG. 1

FIG. 2

0032667

## FIG. 3

## FIG.4

9b    4a    2    4a    9b    4a

6b    6b    6b

3a    3

3a

2    2

9a    5d    9a    5d    5d

IV

IV

FIG.5

FIG.6

FIG.7

0032667

FIG. 8

2a
4a
5d

2b

3

3a

4a
5d

2c

FIG. 9

3

3a

2a

4a

5d

7

6b

3a

3

2b

Europäisches
Patentamt

**EUROPÄISCHER RECHERCHENBERICHT**

0032667
Nummer der Anmeldung

EP 81 10 0046.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 529 095 (DÄUMLER et al.) <br> * Ansprüche 1, 3 bis 8; Seite 5, Absatz 3 bis Seite 6, Absatz 1 * <br> -- | 1,2,5, 6,7 |
| X | DE - A1 - 2 724 314 (STRAZA) <br> * Seite 11, Absatz 1; Seite 15, Absatz 2; Fig. 3, Positionen 18, 20 * <br> -- | 1,2,3, 7 |
| | GB - A - 1 551 817 (REAVELL) <br> * Seite 2, Zeilen 51 bis 56 * <br> -- | 6 |
| | DE - U - 7 611 959 (KRAHN) <br> * Seite 4, Absatz 2 * <br> -- | 8 |
| | DE - A1 - 2 611 378 (BAUM-ELEKTROPHYSIK GMBH) <br> * Seite 7, Absatz 2 * <br> -- | 8 |
| A | FR - A1 - 2 399 631 (COMMUNAUTE EUROPE- ENNE DE L'ENERGIE ATOMIQUE) <br> * Seite 3, Zeilen 16 bis 30 * <br> -- | 1 |
| A | US - A - 4 164 933 (ALOSI) <br> * Fig. 4, Positionen 20 bis 26 * <br> ---- | 1 |

**KLASSIFIKATION DER ANMELDUNG (Int. Cl.³)**

F 24 J 3/02
E 04 D 3/30
E 04 D 3/32

**RECHERCHIERTE SACHGEBIETE (Int. Cl.³)**

E 04 D 3/00
E 04 F 13/00
F 24 J 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 06-04-1981 | PIEPER |

EPA form 1503.1 06.78